# EUROPEAN PATENT SPECIFICATION

(11) **EP 3 466 280 B1**
(45) Date of publication and mention of the grant of the patent: **28.12.2022**
(21) Application number: 17803122.5
(22) Date of filing: 26.05.2017
(51) Int. Cl.: A23P 10/00, A23L 3/36, A23L 3/005, A23L 3/365

(54) **METHOD FOR PREPARING PROCESSED FOOD**
VERFAHREN ZUR HERSTELLUNG VON VERARBEITETEN LEBENSMITTELN
PROCÉDÉ DE PRÉPARATION D'ALIMENTS TRANSFORMÉS

(30) Priority: 26.05.2016 KR 20160065031
(43) Date of publication of application: 10.04.2019
(73) Proprietor: CJ Cheiljedang Corporation, Seoul 04560 (KR)
(72) Inventor: CHO, Won II, Seoul 08018 (KR); LEE, Nam Ju, Seoul 06592 (KR); LEE, Jong II, Seoul 08324 (KR); KANG, Dae Ik, Goyang-si Gyeonggi-do 10387 (KR); KIM, Seung Chul, Hwaseong-si Gyeonggi-do 13835 (KR); KIM, Tae Hyeong, Suwon-si Gyeonggi-do 16325 (KR); PARK, Hee Joon, Seoul 01370 (KR); CHOI, Yoon Jung, Suwon-si Gyeonggi-do 16509 (KR)
(74) Representative: Mummery, Thomas Zack
(86) International application number: PCT/KR2017/005557
(87) International publication number: WO 2017/204604

(56) References cited:
- JP-A- 2006 187 263
- JP-A- 2010 011 819
- JP-A- 2014 000 058
- KR-A- 20060 021 626
- KR-A- 20090 059 951
- KR-A- 20110 016 713
- KR-A- 20150 065 316
- KR-A- 20150 068 063
- RU-C1- 2 579 181
- US-A1- 2003 101 875

## Description

### [Technical Field]

The present application relates to a method for preparing a processed food distributable at room temperature using a frozen block and a processed food prepared thereby.

### [Background Art]

Recently, due to the rapid expansion of the economic scale, as the number of single-person households have been increased, the dietary life has changed, and as food processing methods have evolved, the demand for convenient food that can be eaten easily has been increased. As a result, the market for processed food has been explosively increased. However, unlike a home-style food, since the processed food is mass-produced industrially and is mainly exposed to room temperature during preservation after preparation, distribution, and household consumption, sufficient sterilizing is required in the process of preparing the processed food.

In the conventional preparation process of the processed food, there is a problem that while the sterilizing is achieved by heat-sterilizing (retorting) and sufficient sterilizing is achieved, the quality of the original material is deteriorated. Also, in the process of preparing the processed food by using various original materials (such as vegetables, meat and seafood), since the original materials need to be manually metered and filled or individual automatic fillers are required for each original material, the preparing cost could have been increased and the secondary contamination could have been occurred during the packaging process.

Conventionally, in order to solve these problems, methods has been developed, in which the original material is lyophilized or the processed food is frozen and distributed, as in "Instant soup and its preparation method using frozen vegetables of leafy vegetables" (Korean Patent Laid-Open Publication No. 10-1993-7385), "Fried rice with frozen vegetables" (Korean Patent Laid-Open Publication No. 10-1995-16559), and "Preparing method of frozen pizza using freezing topping block" (Korean Patent Laid-Open Publication No. 10-1998-66554). However, despite these efforts, when the original materials are lyophilized, there was a problem that the tissue of the original material is destroyed and thus the quality of the processed food is deteriorated. Also, even in the case where the processed food is frozen and distributed, it was necessary to store, distribute and preserve in a frozen state, so there was a restriction on sales.

Therefore, there has been still a need for a method of preparing processed foods, which enables to conveniently package and prepare in the preparation process of processed food, and sterilize sufficiently without disturbing the quality of the original material and thus distribute at room temperature.

KR20150065316 relates to a method of processing sweet potato.

JP2014000058 relates to a method of making a retort sauce from meat.

Both documents disclose preprocessing of raw material and rapid freezing before retort-sterilization.

### [Disclosure]

### [Technical Problem]

In order to solve the above problems, it is an object of the present application to provide a method for preparing a processed food distributable at room temperature, which comprises the steps of preprocessing at least one original material selected from vegetables, meat, and seafood, preparing a frozen block by adding the preprocessed original material into a mold and performing rapid freezing of the preprocessed original material, adding the frozen block into a container, and retort-sterilizing the container containing the frozen block.

In addition, it is another object of the present application to provide a processed food distributable at room temperature produced by the above preparing method.

### [Technical Solution]

In order to achieve the above objects, the present application provides a method for preparing a processed food distributable at room temperature, which comprises the steps of preprocessing at least one original material selected from vegetables, meat, and seafood, preparing a frozen block by adding the preprocessed original material into a mold and performing rapid freezing of the preprocessed original material, adding the frozen block into a container, and retort-sterilizing the container containing the frozen block.

According to one embodiment, the method of preparing the processed food distributable at room temperature comprises a step of preprocessing at least one original material selected from vegetables, meat and seafood. The step of preprocessing the one or more original materials is a step of preprocessing the original material before preparing the frozen block by rapid freezing the original material to improve bacteriostatic, antibiosis and mouthfeel.

The original material selected from vegetables, meat and seafood may be one that is washed and/or screened prior to preprocessing. Specifically, the original material of vegetables may be one that is immersed in water or an aqueous solution of 0.01 to 5.0 (w/w, %) of natural bactericides, washed therewith and cut or chopped according to the prescribed requirements, and the meat and seafood when frozen can be cut according to the prescribed requirements after thawing by natural thawing or flowing water.

The step of preprocessing one or more original materials selected from the vegetables, meat, and seafood may comprise a step of blanching the original materials respectively. Through the blanching step, the proliferation and growth of microorganisms in the original material can be suppressed and the mouthfeel of the original material can be improved. The blanching step used in the present application can be performed under different conditions, depending on the type and amount of original material, and the processed food desired.

Specifically, if the original material is vegetables, they may be blanched at 50 to 75 °C for 20 to 120 minutes or at 80 to 110 °C for 1 to 3 minutes. Specifically, the original material of the vegetables which can be damaged in a high temperature process may be blanched at a temperature of 50 to 75 °C for 20 to 120 minutes, more specifically for 30 to 90 minutes, most particularly for 40 to 60 minutes, and the original material of the vegetables which are blanched at the low temperature may be onion, green onion, carrot, radish, or Chinese cabbage. On the other hand, the original material of the vegetables which have little damage to the tissue even when the sterilizing process is performed at high temperature can be blanched at 80 to 110 °C, specifically about 100 °C for about 1 to 3 minutes. For example, the original material of the vegetables blanched at the high temperature may be spicy vegetables such as pepper. The blanching temperature and time may vary within the numerical range depending on the amount of original material and the condition of the original material.

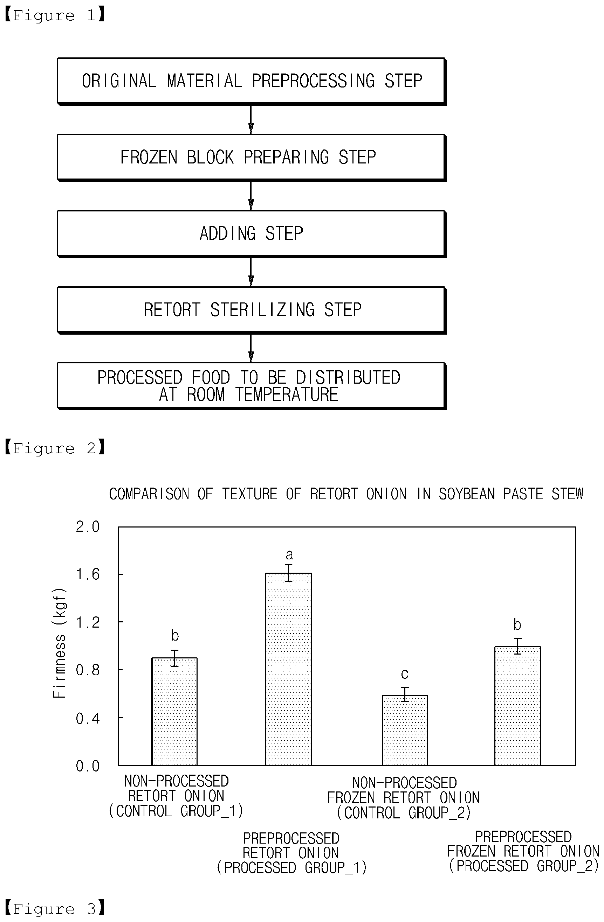

The blanching step may be performed in a 0.3 to 0.5 (w/w, %) calcium lactate solution when the original material is vegetables. This is to strengthen the structure of the pectin bond in the original material of the vegetables. In general, when the original material of vegetables is frozen, there is a problem that the intracellular fibrous materials and the like are adhered to each other due to the generation of pressure according to the formation of ice crystals in the cell tissue and thus the tissue becomes tough, and after thawing, the texture is lowered and thus the mouthfeel is lowered. The blanching step can solve these problems. Specifically, the blanching step firstly activates a pectin esterase enzyme capable of decomposing the methoxy group bond of the pectin in the vegetable cell wall of the original material of vegetables. By such enzymatic activation, the bond of the methoxy group is decomposed and calcium may be recombined between the decomposed methoxy group bonds to form a cross-linking structure between pectins. Since such a cross-linking structure is strong against heat, even if vegetables are sterilized at high temperatures, it allows the vegetable-specific texture and mouthfeel to be maintained (see FIG. 2). When the blanching is performed outside the blanching condition of the original material of the vegetables, the proliferation and growth of microorganisms may not be inhibited, or the mouthfeel of vegetables may be adversely affected. When the concentration of calcium lactate in the solution is lower than the above range, the texture of the original material of vegetables cannot be improved. When the concentration is excessively high, the flavor of the desired processed food may be inhibited due to calcium lactate.

Additionally, after the blanching step, the step of preprocessing the original material of the vegetables may further comprise a step of cooling and dehydrating the original material of the blanched vegetables.

When the original material is meat or seafood, it can be blanched at a temperature of 70-100 °C for 1 to 30 minutes using purified water or the solution comprising at least one selected from complex phosphate, sodium hydrogen carbonate, saccharide, and edible oil of 0.1 to 1.0 (w/w, %) relative to the weight of the original material.

In addition, when the original material is meat or seafood, the step of preprocessing the original material may further comprise a step of curing the original material. The step of curing the original material may be one that cures the original material at 0 to 10 °C for 2 to 12 hours using at least one selected from complex phosphate, sodium hydrogen carbonate, saccharide, and edible oil of 0.1 to 1.0 (w/w, %) relative to the weight of the original material. After the curing step of the original material, the cured original material may be blanched at a temperature of 70 to 100 °C for 5 to 30 minutes. The blanching may be performed using the curing solution or purified water.

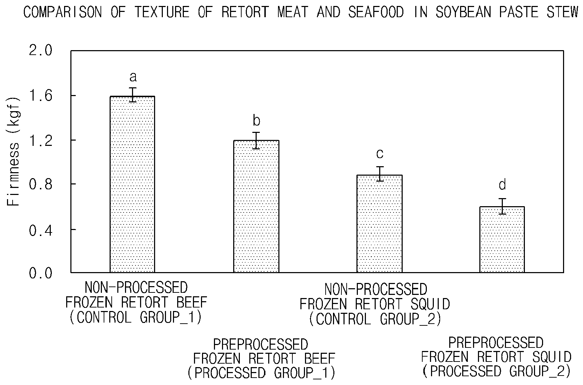

When the meat and seafood are frozen and thawed, or sterilized at high temperatures, their mouthfeel can be very adversely affected. However, when the meat or seafood is blanched as described above, even when they are frozen and thawed or hot sterilized, the texture and mouthfeel can be maintained or improved (see FIG. 3). When the curing or blanching step is performed outside the range of the conditions described above, the proliferation and growth of microorganisms are not inhibited, the adverse effects of the mouthfeel of meat or seafood cannot be prevented, and the flavor of the desired processed food may be impaired.

The step of preprocessing at least one original material selected from the vegetables, meat and seafood may further comprise a step of cooking or seasoning the original material by injecting meat broth, sauce or seasoning liquid into the original material. In the step of preprocessing the original material, when the original material is cooked or seasoned by the meat broth, sauce or seasoning liquid, since there is no need to additionally comprise the step of injecting the meat broth, sauce or seasoning liquid into the original material, it is possible to further simplify the process.

According to one embodiment, the method of preparing the processed food distributable at room temperature comprises a step of performing rapid freezing of the preprocessed original material to prepare a frozen block.

The step of rapid freezing of the preprocessed original material to prepare a frozen block can be performed using a known freezing device which can be easily used by a person skilled in the art without limitation to the freezing device. One or more preprocessed original materials may be prepared as a frozen block respectively or may be mixed and prepared as a frozen block. The appearance of the frozen block and the type of the original material constituting the frozen block are not limited, and they may vary depending on the type of the desired processed food distributable at the room temperature. For example, the frozen block may be in the form of a sphere, a cylinder, a rectangular parallelepiped, a polygonal column or the like.

The frozen block prepared by the preprocessed original material may further comprise water, meat broth, sauces, and/or seasoning liquid in addition to the original material, depending on the type and flavor of the desired processed food. For example, in the step of preprocessing the original material, when the original material is cooked or seasoned by the addition of meat broth, sauce or seasoning liquid to the original material, the original material may undergo rapid freezing with meat broth, sauce or seasoning liquid to prepare a frozen block. In this way, process economics can be improved through process simplification. Also, the frozen block prepared by the preprocessed original material is prepared by rapid freezing each of the preprocessed original materials or mixing them and then rapid freezing the mixture without containing water, meat broth, sauce, and/or seasoning liquid, and as described below, water, meat broth, sauces and/or seasoning liquid can be additionally metered and added at the step of adding the frozen block of the preprocessed original material to the container. The meat broth, sauces and/or seasoning liquid, which is added together with the frozen block of the original material, may be in liquid form or in frozen block form. If the meat broth, sauce and/or seasoning liquid is a frozen block, they may undergo rapid freezing after being metered in advance to suit the type of the desired processed food. The frozen block consisting of the meat broth, sauce and/or seasoning liquid may be prepared as different blocks by cooling the meat broth, sauces and/or seasoning liquid depending on the type of the desired processed food, or prepared by cooling after mixing.

According to one embodiment, the method of preparing the processed food distributable at room temperature comprises a step of adding the frozen block into a container.

The step of adding the frozen block into the container may further comprise a step of sealing the prepared frozen block in a container wherein water, meat broth, sauces and seasoning liquid are added in liquid form or in frozen block form as mentioned above.

In addition, the step of adding the frozen block into the container can automatically charge and package using an automatic solid adding machine. In the past, when filling non-standardized original materials, the original materials were manually metered and filled individually, or each original material was filled by an individual automatic filling machine, resulting in poor process economics and thus resulting in secondary contamination in the packaging process. However, in the preparation method of the present application, since the original materials are standardized by preprocessing and preparing frozen blocks as described above, the preparation process can be simplified by filling only the metered and standardized frozen blocks thus prepared without weighing and filling manually or each of the original material, thereby preventing secondary contamination, increasing process economics and reducing the preparation cost.

According to one embodiment, the method for preparing the processed food distributable at room temperature comprises a step of retort-sterilizing the container to which the frozen block was added.

The step of retort-sterilizing the container containing the frozen block is a step of retort-sterilizing the container containing the frozen block so that the processed food prepared by the present application may be distributed and stored at room temperature.

The retort sterilizing step may be performed at 110 to 130 °C for 15 minutes to 30 minutes, specifically about 120 to 122 °C, which is a general retort system. In addition, the retort sterilizing step may be performed by a two-step sterilizing method of firstly heating at 80 to 110 °C for 10 to 30 minutes and then secondly heating at 110 to 130 °C for 5 to 30 minutes. The two-step retort sterilizing method can promote the thaw of the frozen original material in the frozen block through the first heating and can generate a uniform and rapid heating effect through the second heating after reducing the temperature deviation inside and outside of the product. This two-step sterilizing method can reduce problems caused by general high-temperature sterilizing, and can also reduce the overload of equipment.

The present application may also provide a processed food distributable at room temperature prepared by the method described above. The processed food is a processed food which is distributable at room temperature by simply packaging and preparing in the preparation process and sterilizing sufficiently without deterioration of the quality of the original material.

### [Advantageous Effects]

The present application has the effect of providing a method of preparing a processed food distributable at room temperature by simply packaging and preparing various original materials, which are not standardized, in the preparation process, and sterilizing sufficiently without deteriorating the quality of the original materials.

In addition, the present application has the effect of providing the processed food distributable at room temperature by sufficiently sterilizing the original materials without deteriorating the quality thereof.

### [Description of Drawings]

FIG. 1 is a flow chart of a method of preparing a processed food of the present application.
FIG. 2 is a graph showing the mechanical measurement values for the textures of the original materials of the vegetables in the retort soybean paste stew prepared by the preparing method of the present application (significance test (p < 0.05)).
FIG. 3 is a graph showing the mechanical measurement values for the textures of the original materials of the seafood in the retorted soybean paste stew prepared by the preparing method of the present application (significance test (p < 0.05)).

### [Best Mode]

Hereinafter, the present application will be described in more detail by way of examples. However, the following examples are provided only for easier understanding of the present application, and the present application is not limited by the following examples.

### Examples

### Preparation Example 1: Preparation of processed food using frozen block solid

The preparation of the frozen block of the present application and the representative preparation process of various processed foods prepared by utilizing the same is as follows, and the process thereof is shown in FIG. 1

### (1) Step to preprocess original material

In order to remove contaminants such as dust and foreign matters on the surface of the original materials, it was first washed repeatedly with clean water, and cut into a suitable size according to the characteristics of the menu of the food to prepare original materials. Specifically, the original materials of vegetables were prepared by washing, cutting or chopping. In the case of meat and seafood, thaw with natural thaw or flowing water, when frozen, is performed and cut according to prescribed requirements to prepare original materials.

For example, when preparing frozen blocks for a stir-fried octopus with rice, in order to remove contaminants such as dust, foreign matters and the like on the surface of spicy vegetables such as onion, green onion, blue pepper, or red pepper and octopus, it was first washed repeatedly with clean water, and cut into a suitable size to prepare original materials.

As another example, when preparing frozen blocks for a stew, in order to remove contaminants such as dust, foreign matters and the like on the surface of spicy vegetables such as onion, green onion, blue pepper, or red pepper and the like, it was first washed repeatedly with clean water, and cut into a suitable size to prepare original materials.

For example, spicy vegetables such as pepper were blanched in water at 100 °C for 2 minutes, and onion, carrot, green onion, radish, and Chinese cabbage were blanched in calcium lactate solution of about 0.4 (w/w, %) at about 65 °C (onion, carrot, and green onion) for about 20 to 60 minutes and at about 55 °C (radish, Chinese cabbage) for 20 to 60 minutes, respectively (blanching time is slightly different depending on the original material). The octopus or squid cut to the appropriate size was blanched in water at about 100 °C for 2 minutes, or blanched in sodium hydrogen carbonate solution of about 0.4 (w/w, %) at about 100 °C for 2 minutes. The pork cut to the appropriate size was blanched in water at about 100 °C for 5 minutes, or blanched in sodium hydrogen carbonate solution of about 0.4 (w/w, %) at about 100 °C for 5 minutes.

### (2) Step to prepare frozen block

The frozen block was prepared by adding the preprocessing processed original material in a certain amount into a round or rectangular mold and rapidly freezing it. Depending on the desired processed food, the sauce, meat broth, and/or seasoning liquid are separately prepared in liquid form or frozen block form.

### (3) Step of adding the frozen block into the container

The prepared frozen block was automatically inputted into a pouch or a tray packaging material by using an automatic solid adding machine or the like of the rotary type. Here, the solid automatic adding machine of the rotary type refers to a facility for adding into the packaging materials individually or in mixtures by adding the prepared frozen block into the packaging material in the form of a pouch package by a dropping manner.

Specifically, the frozen block filling process using a rotary type adding machine is composed of a step of continuously transferring frozen blocks of a certain weight composed of various raw materials such as blanching preprocessed meat, vegetables and seafood, and adding the frozen blocks into the pouch packaging material, using a conveyor belt, a filling hopper and an automatic solid adding machine.

The meat broth, sauces, and/or seasoning liquid were further automatically added and sealed in the liquid form or in the frozen block form into the packaging material containing frozen block solids depending on the desired processed food.

### (4) Step for retort-sterilizing

A processed food distributable at room temperature was prepared by subjecting the packaging material containing the frozen block to 1) the heat-sterilizing (first-step retort) at 121 °C for 25 minutes in the usual retort mode, or 2) the two-step retort heat-sterilizing of firstly heating at 95 °C for 15 minutes, and then secondly heating at 121 °C for 15 minutes, followed by subjecting it to the cooling process, while considering the room temperature distribution or refrigerated distribution conditions

### Experimental Example 1: Confirmation of the effect of detailed improvement when using frozen block

The frozen block of the present application was examined in detail in terms of the microorganism sterilizing, improvement of sensory quality and cost reduction as to the various advantages that arise from the application of the site-production processes

### (1) Measurement of sterilizing effect after retort when using frozen block

A detailed study on the killing effect of microorganism was performed for the frozen blocks prepared by the process of Preparation Example 1 and the three kinds of the stews and the sauce for a bowl of rice served with toppings using it after retort-sterilizing them. The results are shown in table 1. The control group was prepared by conventional manual method without preparing frozen block, and the specific preparation and sterilizing conditions are shown in table 1.

**Table 1**

| Test product | Condition of Preparation and sterilization | Total bacteria (CFU/g) | | Thermal resistanc e bacteria (CFU/g) | | Fungi (CFU/g) | |
|---|---|---|---|---|---|---|---|
| | | Before steril izing | After sterilizi ng | Before sterilizing | After steriliz ing | Before sterilizing | After sterilizing |
| Control group 1 (three kinds of kimchi stew, soybean paste stew, and sausage stew by conventional manual method) | Individual input of solid ingredients of original material + 121°C, sterilization for 25 minutes | 10⁴~10⁶ | 0 | 10²~10⁴ | 0 | 10²~10³ | 0 |
| Control group 2 (three kinds of kimchi stew, soybean paste stew, and sausage stew by conventional manual method) | Individual input of solid ingredients of original [material + 95°C->121°C two-step retort | 10⁴~10⁶ | 0 | 10²~10⁴ | 0 | 10²~10³ | 0 |
| Preparation example 1 (kimchi stew using frozen block) | Preprocessed frozen block 121°C, sterilization for 25 minutes | 10⁴ | 0 | 10² | 0 | 10² | 0 |
| Preparation example 2 (Kimchi stew using frozen block) | Preprocessed frozen block + 95°C->121°C two-step retort | 10⁴ | 0 | 10² | 0 | 10² | 0 |
| Preparation example 3 (soybean paste stew using frozen block) | Preprocessed frozen block 121°C, sterilization for 25 minutes | 10⁶ | 0 | 10⁴ | 0 | 10³ | 0 |
| Preparation example 4 (soybean paste stew using frozen block) | Preprocessed frozen block + 95°C->12 1°C two-step retort | 10⁶ | 0 | 10⁴ | 0 | 10³ | 0 |
| Preparation example 5 (sausage stew using frozen block) | Preprocessed frozen block 121°C, sterilization for 25 minutes | 10⁵ | 0 | 10³ | 0 | 10³ | 0 |
| Preparation example 6 (sausage stew using frozen block) | Preprocessed frozen block + 95°C->12 1°C two-step retort | 10⁵ | 0 | 10³ | 0 | 10³ | 0 |
| Control group 3 (sauce for stir-fried octopus with rice by conventional manual method) | Individual input of solid ingredients of original material + 121°C, sterilization for 25 minutes | 10⁴~10⁵ | 0 | 10²~10⁴ | 0 | 10²~10³ | 0 |
| Preparation example 7 (sauce for stir-fried octopus with rice using frozen block) | Preprocessed frozen block 121°C, sterilization for 25 minutes | 10³~10⁴ | 0 | 10²~10³ | 0 | 10²~10³ | 0 |
| Preparation example 8 (sauce for stir-fried octopus with rice using frozen block) | Preprocessed frozen block + 95°C->12 1°C two-step retort | 10³~10⁴ | 0 | 10²~10³ | 0 | 10²~10³ | 0 |

### Confirmation of sterilizing effect after retort when using frozen block

As shown in table 1, even when the frozen block of the present application was prepared and then inputted and packaged, general bacteria, thermal resistance spore forming bacteria and fungi were all sterilized as in the conventional individual solid adding method, thereby being proved to be hygienically safe.

### (2) Effect of improvement of sensory quality when using frozen block

The effect of the improvement on the sensory quality of the finished product using the frozen block prepared by the method of Preparation Example 1 was compared with those of products of the stew and the sauce for a bowl of rice served with toppings which are prepared by a conventional individual solid adding method and retorted. The results are shown in Table 2.

**Table 2**

| Manu | Sample group | Preparation and sterilization | Overa ll taste (5 point scale ) | Mouthf eel of vegeta bles | Appeara nce (color | Storage quality |
|---|---|---|---|---|---|---|
| Kimch i stew | Control group 1 | Individual input of original material + one-step retort | 3.8^{a} | 3.6^{a} | 3.5^{b} | Room temperatu re distribut ion |
| | Preparati on Example 1 | Input of frozen block + one-step retort | 3.9^{a} | 3.7^{a} | 3.8^{a} | Room temperatu re distribut ion |
| | Preparati on Example 2 | Input of frozen block + two-step retort | 3.9^{a} | 4.0^{a} | 3.9^{a} | Room temperatu re distribut ion |
| Soybe an paste stew | Control group 1 | Individual input of original material + one-step retort | 3.7^{a} | 3.7^{a} | 3.6^{a} | Room temperatu re distribut ion |
| | Preparati on Example 3 | Input of frozen block + one-step retort | 3.8^{a} | 3.8^{a} | 3.8^{a} | Room temperatu re distribut ion |
| | Preparati on Example 4 | Input of frozen block + two-step retort | 3.9^{a} | 3.9^{a} | 3.9^{a} | Room temperatu re distribut ion |
| Sausa ge Stew | Control group 1 | Individual input of original material + one-step retort | 3.7^{a} | 3.7^{a} | 3.7^{a} | Room temperatu re distribut ion |
| | Control group 2 | Individual input of original material + two-step retort | 3.7^{a} | 3.7^{a} | 3.8^{a} | Room temperatu re distribut ion |
| | Preparati on Example 5 | Input of frozen block + one-step retort | 3.8^{a} | 3.8^{a} | 3.8^{a} | Room temperatu re distribut ion |
| | Preparati on Example 6 | Input of frozen block + two-step retort | 4.0^{a} | 3.8^{a} | 3.9^{a} | Room temperatu re distribut ion |
| Stir-fried octop us with rice | Control group 3 | Individual input of original material + one-step retort | 3.7^{a} | 3.6^{a} | 3.5^{b} | Room temperatu re distribut ion |
| | Preparati on Example 7 | Input of frozen block + one-step retort | 3.9^{a} | 3.7^{a} | 3.8^{a} | Room temperatu re distribut ion |
| | Preparati on Example 8 | Input of frozen block + two-step retort | 3.9^{a} | 3.9 | 3.9^{a} | Room temperatu re distribut ion |

### Results of sensory evaluation when using frozen block

* Significance test (P < 0.05), indication by the same alphabet character: No significant difference.

As shown in table 2, when the frozen block of the present application was used, the quality improvement effect showed in terms of the overall taste, the mouthfeel of the solid, the color, and the appearance, etc. equally or excellently around the range of 0.1 to 0.2 points for each item compared to that of the conventional individual solid adding method,

### (3) Effect of cost reduction when using frozen block

In addition, the effect on the cost reduction through improvement of work efficiency by the use of frozen block prepared by the preparing method of the present application in compared to the solid adding method through the conventional individual solid adding method through manual work was examined in detail. As the frozen block is automatically inputted, since the work force required to prepare the processed food can be reduced by about 70 to 90% compared to the individual manual solid adding method, the entire preparation cost was also reduced to one-third to one-fifth, thereby ensuring cost competitiveness.

### Experimental Example 2: Effect of improvement of mouthfeel of vegetables when using frozen block

In addition, the mouthfeel level of the original material of the vegetables in the frozen block prepared by the preparing method of this application was compared to that of the test product prepared by the conventional individual solid adding method.

In the preparation method of Preparation Example 1, a frozen block was prepared after applying a low temperature blanching process at a temperature of 50 to 75 °C for 20 to 120 minutes in a calcium lactate solution of 0.3 to 0.5 (w/w, %) for each kind of vegetables.

The preprocessed original material of the vegetables was frozen to prepare a frozen block, and the frozen block was retort sterilized. As a control group, frozen vegetables that had not been preprocessed but retort-sterilized by the above method, and fresh vegetables that had not been preprocessed but retort-sterilized were used. The vegetables prepared according to the method of the present application and the vegetables of the control group were compared and analyzed with each other after measuring the mechanical firmness values with a texture analyzer, respectively.

As a result of the experiment, as shown in FIG. 2, in the case of vegetables that were frozen after being preprocessed by the method of the present application and then were retort-sterilized, the firmness value was 1.7 times higher than the control group. It was confirmed that even though the vegetables preprocessed by the method of this application are subjected to the freezing and thawing step and then are heat at the high temperature, the texture and mouthfeel of the original vegetables are preserved very well. In addition, it can be seen that when comparing the firmness of retorted fresh vegetables and the firmness of the vegetables that have been preprocessed and retorted by the method of the present application, the vegetables that are preprocessed and retorted by the method of the present application exhibited a slightly higher firmness. This suggests that in the case of the vegetables that are preprocessed and retorted by the present application method, the texture and mouthfeel are very excellently preserved, even if frozen and thawed.

### Experimental Example 3: Improvement effect on mouthfeel of meat and seafood when using frozen block

The frozen block was prepared by curing complex phosphate, sodium hydrogen carbonate, saccharides, and edible oil of 0.1 to 1.0 (w/w, %) relative to the weight of the original material individually or in mixtures at 0 to 10 °C for 2 to 12 hours and then blanching at a temperature of 70 to 100 °C for 5 to 30 minutes, before preparing the meat and seafood as a frozen block. As a result, as shown in FIG. 3, it was confirmed that the measured value of mechanical firmness after retorted was decreased by 1.4 times on average in contrast to the non-processed frozen block and thus the tissue softening was occurred and the mouthfeel was improved.

From the above results, when preparing the processed food using the frozen block through the preparation method of the present application, the present application has proved to be a useful technique as compared to the individual solid adding method through the conventional manual method.

As a result of the above study, it was confirmed that the frozen block makes it possible to reduce the preparing cost of the processed food and also has advantages such as uniform quality implementation and the reduction of secondary contamination compared to the conventional individual solid adding methods, when properly used, in terms of the taste characteristics and physical properties of each menu. Thus, it can be seen that the use of the frozen block in this application has several advantages in preparing various processed foods.

## Claims

1. A method for preparing a processed food distributable at room temperature comprising the steps of:
preprocessing at least one original material selected from vegetables, meat, and seafood;
preparing a frozen block by adding the preprocessed original material into a mold and performing rapid freezing of the preprocessed original material;
adding the frozen block into a container; and
retort-sterilizing the container containing the frozen block.

2. The method for preparing the processed food distributable at room temperature according to claim 1,
wherein the step of preprocessing at least one original material selected from vegetables, meat, and seafood comprises a step of blanching the original materials respectively.

3. The method for preparing the processed food distributable at room temperature according to claim 2,
wherein the step of blanching the original material of vegetables is performed by blanching using a calcium lactate solution having a concentration of 0.3 to 0.5 (w/w, %), at a temperature of 50 to 75 °C for 20 to 120 minutes or at 80 to 110 °C for 1 to 3 minutes.

4. The method for preparing the processed food distributable at room temperature according to claim 2,
wherein the step of blanching the original material of meat or seafood is one that blanches at 70 to 100 °C for 1 to 30 minutes using purified water or the solution comprising at least one selected from complex phosphate, sodium hydrogen carbonate, saccharide, and edible oil of 0.1 to 1.0 (w/w, %).

5. The method for preparing the processed food distributable at room temperature according to claim 2,
wherein the step of blanching the original material of meat or seafood further comprises a step of curing the original material of meat or seafood,
the step of curing the original material of meat or seafood is one that cures at 0 to 10 °C for 2 to 12 hours using at least one selected from complex phosphate, sodium hydrogen carbonate, saccharide, and edible oil of 0.1 to 1.0 (w/w, %) relative to the weight of the original material, and
the step of blanching the original material of meat or seafood is one that blanches at 70 to 100 °C for 1 to 30 minutes.

6. The method for preparing the processed food distributable at room temperature according to claim 1,
wherein the step of adding the frozen block to the container is one that automatically fills and packages using an automatic solid adding machine.

7. The method for preparing the processed food distributable at room temperature according to claim 1,
wherein the step of retort-sterilizing is performed by a two-step sterilizing method of firstly heating at 80 to 110 °C for 10 to 30 minutes and then secondly heating at 110 to 130 °C for 5 to 30 minutes.

## Patentansprüche

1. Verfahren zur Herstellung eines bei Raumtemperatur vertreibbaren verarbeiteten Lebensmittels, das die folgenden Schritte beinhaltet:
Vorverarbeiten von wenigstens einem Ausgangsmaterial, ausgewählt aus Gemüse, Fleisch und Meeresfrüchten;
Herstellen eines gefrorenen Blocks durch Geben des vorverarbeiteten Ausgangsmaterials in eine Form und Schnellfrieren des vorverarbeiteten Ausgangsmaterials;
Geben des gefrorenen Blocks in einen Behälter; und
Retortensterilisieren des den gefrorenen Block enthaltenden Behälters.

2. Verfahren zur Herstellung des bei Raumtemperatur vertreibbaren verarbeiteten Lebensmittels nach Anspruch 1,
wobei der Schritt des Vorverarbeitens von wenigstens einem Ausgangsmaterial, ausgewählt aus Gemüse, Fleisch und Meeresfrüchten, einen Schritt des Blanchierens der jeweiligen Ausgangsmaterialien beinhaltet.

3. Verfahren zur Herstellung des bei Raumtemperatur vertreibbaren verarbeiteten Lebensmittels nach Anspruch 2,
wobei der Schritt des Blanchierens des Gemüseausgangsmaterials durch Blanchieren unter Verwendung einer Calciumlactatlösung mit einer Konzentration von 0,3 bis 0,5 (Gew.-%) bei einer Temperatur von 50 bis 75°C für 20 bis 120 Minuten oder bei 80 bis 110°C für 1 bis 3 Minuten erfolgt.

4. Verfahren zur Herstellung des bei Raumtemperatur vertreibbaren verarbeiteten Lebensmittels nach Anspruch 2,
wobei der Schritt des Blanchierens des Ausgangsmaterials aus Fleisch oder Meeresfrüchten das Blanchieren bei 70 bis 100°C für 1 bis 30 Minuten unter Verwendung von gereinigtem Wasser oder einer Lösung, die wenigstens eines aus komplexem Phosphat, Natriumhydrogencarbonat, Saccharid und Speiseöl (0,1 bis 1,0 (Gew.-%)) umfasst, beinhaltet.

5. Verfahren zur Herstellung des bei Raumtemperatur vertreibbaren verarbeiteten Lebensmittels nach Anspruch 2,
wobei der Schritt des Blanchierens des Ausgangsmaterials aus Fleisch oder Meeresfrüchten ferner einen Schritt des Pökelns des Ausgangsmaterials aus Fleisch oder Meeresfrüchten beinhaltet,
wobei der Schritt des Pökelns des Ausgangsmaterials aus Fleisch oder Meeresfrüchten das Pökeln bei 0 bis 10°C für 2 bis 12 Stunden unter Verwendung von wenigstens einem aus komplexem Phosphat, Natriumhydrogencarbonat, Saccharid und Speiseöl (0,1 bis 1,0 (Gew.-%) bezogen auf das Gewicht des Ausgangsmaterials) beinhaltet, und
der Schritt des Blanchierens des Ausgangsmaterials aus Fleisch oder Meeresfrüchten das Blanchieren bei 70 bis 100°C für 1 bis 30 Minuten beinhaltet.

6. Verfahren zur Herstellung des bei Raumtemperatur vertreibbaren verarbeiteten Lebensmittels nach Anspruch 1,
wobei der Schritt des Gebens des gefrorenen Blocks in den Behälter das automatische Befüllen und Verpacken mit einer Maschine zum automatischen Hinzufügen von Feststoffen beinhaltet.

7. Verfahren zur Herstellung des bei Raumtemperatur vertreibbaren verarbeiteten Lebensmittels nach Anspruch 1,
wobei der Schritt des Retortensterilisierens durch ein zweistufiges Sterilisationsverfahren erfolgt, bei dem zuerst 10 bis 30 Minuten lang bei 80 bis 110°C erhitzt wird und dann 5 bis 30 Minuten lang bei 110 bis 130°C erhitzt wird.

## Revendications

1. Procédé de préparation d'un aliment transformé distribuable à température ambiante comprenant les étapes suivantes :
la pré-transformation d'au moins un ingrédient d'origine sélectionné parmi des légumes, de la viande et des fruits de mer ;
la préparation d'un bloc congelé en ajoutant l'ingrédient d'origine pré-transformé dans un moule et réalisant une congélation rapide de l'ingrédient d'origine pré-transformé ;
l'ajout du bloc congelé dans un récipient ; et
la stérilisation en vase clos du récipient renfermant le bloc congelé.

2. Procédé de préparation de l'aliment transformé distribuable à température ambiante selon la revendication 1,
dans lequel l'étape de pré-transformation d'au moins un ingrédient d'origine sélectionné parmi des légumes, de la viande et des fruits de mer comprend une étape de blanchiment des ingrédients d'origine respectifs.

3. Procédé de préparation de l'aliment transformé distribuable à température ambiante selon la revendication 2,
dans lequel l'étape de blanchiment de l'ingrédient d'origine constitué de légumes est réalisée par blanchiment à l'aide d'une solution de lactate de calcium ayant une concentration de 0,3 à 0,5 (% en masse), à une température de 50 à 75 °C pendant 20 à 120 minutes ou à 80 à 110 °C pendant 1 à 3 minutes.

4. Procédé de préparation de l'aliment transformé distribuable à température ambiante selon la revendication 2,
dans lequel l'étape de blanchiment de l'ingrédient d'origine constitué de viande ou de fruits de mer est une étape qui blanchit à 70 à 100 °C pendant 1 à 30 minutes à l'aide d'eau purifiée ou de la solution comprenant au moins une substance sélectionnée parmi phosphate complexe, hydrogénocarbonate de sodium, saccharide et huile comestible de 0,1 à 1,0 (% en masse).

5. Procédé de préparation de l'aliment transformé distribuable à température ambiante selon la revendication 2,
dans lequel l'étape de blanchiment de l'ingrédient d'origine constitué de viande ou de fruits de mer comprend en outre une étape de traitement de l'ingrédient d'origine de viande ou de fruits de mer,
l'étape de traitement de l'ingrédient d'origine de viande ou de fruits de mer est une étape qui traite à 0 à 10 °C pendant 2 à 12 heures à l'aide d'au moins une substance sélectionnée parmi phosphate complexe, hydrogénocarbonate de sodium, saccharide et huile comestible de 0,1 à 1,0 (% en masse) par rapport au poids de l'ingrédient d'origine, et
l'étape de blanchiment de l'ingrédient d'origine de viande ou de fruits de mer est une étape qui blanchit à 70 à 100 °C pendant 1 à 30 minutes.

6. Procédé de préparation de l'aliment transformé distribuable à température ambiante selon la revendication 1,
dans lequel l'étape d'ajout du bloc congelé au récipient est une étape qui remplit et emballe automatiquement à l'aide d'une machine d'ajout automatique de solides.

7. Procédé de préparation de l'aliment transformé distribuable à température ambiante selon la revendication 1,
dans lequel l'étape de stérilisation en vase clos est réalisée par un procédé de stérilisation en deux étapes consistant d'abord à chauffer à 80 à 110 °C pendant 10 à 30 minutes, puis à chauffer à 110 à 130 °C pendant 5 à 30 minutes.
